# EUROPEAN PATENT SPECIFICATION

(11) **EP 2 429 839 B1**
(45) Date of publication and mention of the grant of the patent: **04.07.2018**
(21) Application number: 10720040.4
(22) Date of filing: 12.05.2010
(51) Int. Cl.: B60G 7/02, B60G 99/00

(54) **TRAILING ARM MOUNTING BRACKET**
KONSOLE ZUR BEFESTIGUNG EINER LÄNGSLENKER
SUPPORT DE MONTAGE D'UN BRAS OSCILLANT

(30) Priority: 14.05.2009 NL 2002893
(43) Date of publication of application: 21.03.2012
(73) Proprietor: VDL Weweler B.V., 7325 WC Apeldoorn (NL)
(72) Inventor: AALDERINK, Derk, Geert, NL-7245 NV Laren (NL)
(74) Representative: EP&C
(86) International application number: PCT/NL2010/000079
(87) International publication number: WO 2010/131949

(56) References cited:
- EP-A- 1 721 762
- WO-A-2007/120273
- NL-C2- 1 033 534
- US-A- 5 337 997

## Description

The invention relates to the field of wheel axle suspensions. More in particular, the invention relates to a vehicle comprising a trailing arm mounting bracket mounting a trailing arm to a chassis of the vehicle, preferably a commercial vehicle, for example a lorry or a lorry trailer. The trailing arm, also called suspension arm, supports the wheel axle and is hingeably connected at its front end, viewed in the direction of travel of the vehicle, to the mounting bracket.

The invention furthermore relates to a mounting bracket and to a wheel axle suspension comprising such a mounting bracket, for use in such a vehicle.

Vehicles provided with a mounting bracket supporting a suspension arm are known in the art. Such a mounting bracket typically comprises two sidewall portions each having a top end and a bottom end, which sidewall portions are positioned opposite each other at a mutual distance for receiving an end of the trailing arm inbetween their respective bottom ends, and a top plate welded to the top ends of both sidewall portions. The top plate is provided with holes for in a mounted condition receiving vertically orientated chassis mounting bolts for mounting the bracket to the chassis.

For example in EP 1 057 716 a mounting bracket is disclosed which has two sidewall portions for receiving an end of the trailing arm therein between, and a top plate welded to both sidewall portions. The top plate is provided with holes for receiving chassis mounting bolts for mounting the bracket to the chassis. The top plate extends in a direction away from the sidewall portions such that the holes for receiving the bolts are positioned at some distance from the sidewall portions to allow tools to engage the bolts during installation. The weld fixing the side wall portions to the top plate is located inbetween the side surface of the sidewall portions and bottom surface of the top plate.

A draw back of this type of mounting brackets is that the wide top plate and the mutually wide spaced holes for fastening the bracket require a chassis beam having a lower flange with a width equal to or larger than the width of the of the top plate. The wide lower flange, which extends over the entire length of the chassis beam, adds significantly to the weight of the vehicle.

In an alternative embodiment known in the prior art, no top plate is used for mounting the bracket to the chassis. Instead, the sidewall portions are welded directly to the chassis. Although this allows for a lighter chassis and a compacter mounting bracket, the welding of the bracket to the chassis is relatively complicated and lengthy and takes significantly more time than bolting the bracket to the chassis.

NL 1 033 534 discloses a wheel axle suspension that comprises two bearing brackets, fixed to a vehicle chassis on either side of the vehicle, and two longitudinal bearing arms, each hingedly fixed in one of the bearing brackets. WO 2007/120273, EP 1 721 762 and US 5 337 997 each disclose mounting brackets for supporting a trailing arm, which mounting brackets are mounted to a vehicle frame with two rows of bolts.

It is an object of the invention to provide an improved mounting bracket, more in particular to provide a vehicle comprising such a mounting bracket. This object is achieved by means of a vehicle comprising a trailing arm mounting bracket according to claim 1. The invention furthermore provides a set of a mounting bracket and a contra profile for use in such a vehicle and a wheel axle suspension comprising such a set for use in a vehicle according to claim 1.

A vehicle according to the invention is provided with a mounting bracket which comprises a top plate provided with holes for in a mounted condition receiving vertically orientated bolts for mounting the bracket to the chassis. The holes for receiving the bolts are located in the part of the top plate that is located within the contour of the sidewall portions. Since the holes for receiving the bolts are located within the contour of the sidewall portions, the top plate does not need to extend way beyond the side wall portions for supporting holes for receiving the bolts. Thus, the top plate can be dimensioned relatively narrow, and the bracket can be mounted to for example an I-beam having a narrow flange.

Therefore, the bracket according to claim 1 can quickly be connected to the chassis by way of bolts and allows for a chassis comprising chassis beams with relatively narrow lower flanges, and thus for a relatively light chassis.

Furthermore, the top plate of each bracket is provided with at least one row of two or more holes for receiving chassis connecting bolts when the mounting bracket is mounted to the chassis, which at least one row, when the bracket is mounted to a chassis, extends in a direction parallel to the longitudinal direction of the vehicle. The bracket is connected to the chassis using only one row of holes, which allows for a narrow top plate.

In a preferred embodiment, two rows of holes are provided in the top plate, one for mounting the bracket at the left side of the chassis, and one for mounting the bracket at the right side of the chassis. When the bracket is to be mounted to the chassis, only one of the two rows of holes is used. Thus, the rows can be positioned close together allowing for a narrow top plate.

Preferably the bracket is designed for further connecting to the chassis by a cross connection, in particular via a cross strut, to provide the bracket with extra stability during use, in particular with respect to loads acting in the lateral direction, i.e. perpendicular to the longitudinal direction of the vehicle.

Preferably the mounting bracket comprises a top plate which falls within the contour of the side walls. Such a bracket allows for quick and easy mounting to the chassis, in particular to a chassis comprising chassis beams with narrow flanges. Also, since the top plate of the bracket is relatively narrow, the bracket itself is also relatively light compared to brackets comprising a top plate supporting holes outside the contour of the sidewall portions.

Preferably, the mutual distance between top ends of the sidewall portions is smaller than the mutual distance between the bottom ends of the sidewall portions, such that the mounting bracket is wide at its bottom end and narrower at its top end. This embodiment is in particular advantageous for mounting a wide trailing arm to a narrow chassis beam.

Preferably, each sidewall portion is positioned with a side surface of its upper end against a side surface of the top plate, the side surface of the top plate extending above the top end of the sidewall portions. A weld is located between a topside surface of each sidewall portion and a side surface of the top plate for fixing the sidewall portions against the top plate. Thus the top surface of the top plate, the surface which in mounted condition is positioned against the lower flange of the chassis beam, is located above the upper ends of the side wall portions and above the weld connecting the top plate to the side wall portions.

Preferably, the top plate extends above the top surface of the side wall portions over such a distance that after the top plate is welded to the side wall portions, the weld does not extend above the top surface of the top plate. Therefore there is no need for subsequent machining of the top plate surface, more in particular the weld along the sides of the top plate surface, to regain a flat mounting surface which can be placed against the flat surface of the chassis.

Furthermore, since the sidewall portions are positioned with their upper end against a side of the top plate, the top plate is in direct contact with the sidewall portions. When the bracket is loaded, forces acting in a lateral direction can thus be transferred directly from the lateral sidewall portions to the top plate and do not, or only in a limited amount, load the welds fixing the sidewall portions to the top plate.

Preferably, the mounting bracket is composed out of pieces of sheet material which are welded together. This provides a mounting bracket with high structural strength. Furthermore, by welding the components to each other, the position of the sidewall portions with respect to the top plate is fixed, and does not need to be monitored or adjusted when mounting the bracket to the chassis.

In a further preferred embodiment, the bracket is provided with a front wall portion and a back wall portion, which both connect the sidewall portions with each other and both are welded to the top plate such that the top plate is welded along its entire contour to the wall portions. Thus the mounting bracket is provided with extra structural strength, in particular with respect to forces acting upon the bracket in the lateral direction.

Preferably, the sidewall portions and the top plate of the mounting bracket are designed such that the mounting bracket is essentially symmetrical with respect to a plane of symmetry positioned inbetween the two side wall portions, such that the mounting bracket can be mounted to a left side of the vehicle as well as to a right side of the vehicle.

Thus only one type of mounting brackets has to be produced and kept in stock, which type can be fitted to the left side as well as to the right side of the vehicle.

Preferably, the holes for receiving the bolts are provided with internal screw thread. Thus there is no need for using nuts for fastening the bolts. This is particularly beneficial since it is not necessary to position the nuts in the limited space inbetween the side wall portions. According to the invention, the mounting bracket is fixed to the chassis of the vehicle, more in particular to a flange of for example an I-beam, via a contra profile provided with through holes for receiving the bolts. Each contra profile is provided with a first and second contact surface which in mounted condition lie against the lower flange and the middle body of the chassis beam respectively.

The contra profile allows for mounting the bracket to the chassis using one row of nuts only, and for the mounting bracket to transfer torque forces to the chassis without the need for extra reinforcements on the chassis. The contra profile is in particular beneficial when fixing the bracket to a relatively thin bottom flange.

The invention also provides set of a mounting bracket and a contra profile according to claim 12 and a wheel axle suspension according to claim 13, comprising a set according to claim 12, for use in a vehicle, for example a lorry or a lorry trailer, according to claim 1.

Further objects, embodiments and elaborations of the apparatus according to the invention will be apparent from the following description, in which the invention is further illustrated and elucidated on the basis of a number of exemplary embodiments, with reference to the drawings. In the drawings similar parts have been indicated with similar reference signs.
Figs. 1 shows a schematic perspective view of a trailing arm mounting bracket according to the invention;
Fig. 2 shows a side view of the bracket of fig. 1;
Fig. 3 shows a cross sectional view on the line A-A in fig. 2;
Fig. 4 shows a frontal view of the bracket of fig. 1 in a mounted condition;
Fig. 5 shows a perspective view of a bracket of fig 1 in an alternative mounted condition; and
Fig. 6 shows a frontal view of the bracket of fig. 1 similar to the view in Fig. 4, showing further components of the wheel axle suspension system.

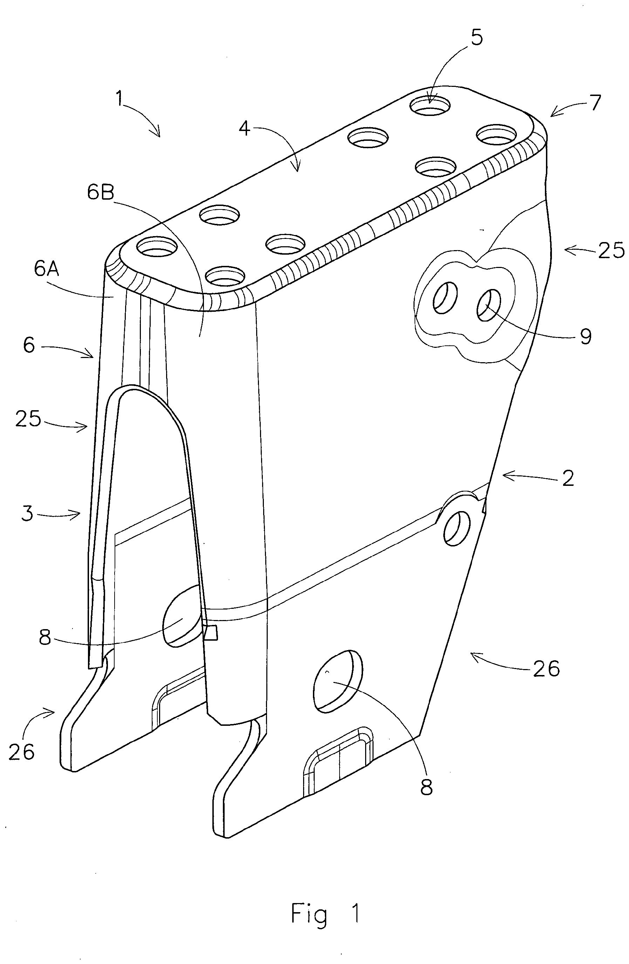

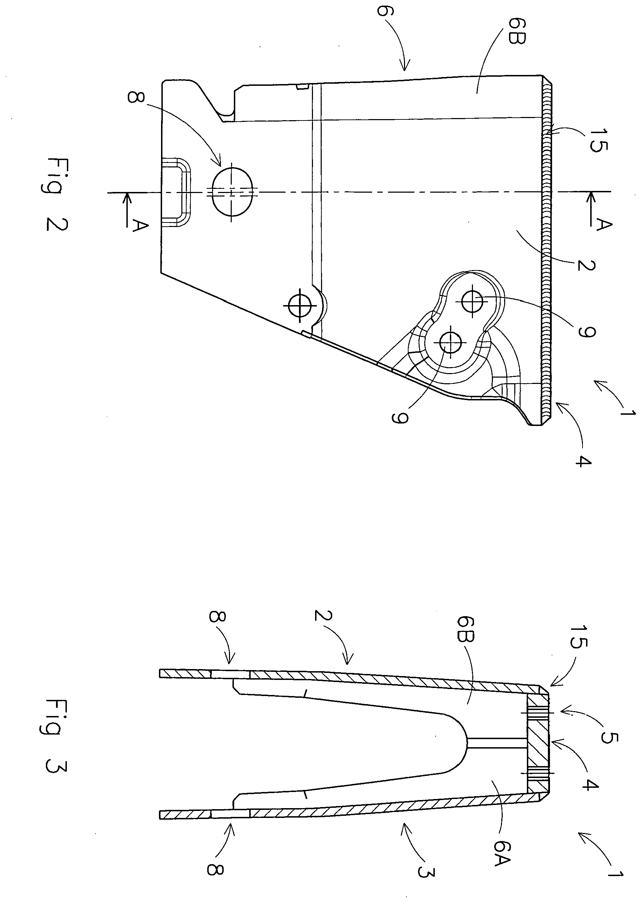

Fig. 1 shows an exemplary embodiment of a trailing arm mounting bracket 1 according to the invention. Fig. 2 shows a side view of the same bracket and Fig. 3 shows a cross sectional view of the same bracket on the line A-A shown in fig. 2.

The mounting bracket 1 comprises two sidewall portions 2, 3, each having a top end 25 and a bottom end 26. The sidewall portions 2, 3 are positioned opposite each other at a mutual distance for receiving an end of the trailing arm (not shown) inbetween their respective bottom ends 26. The side wall portions are at their bottom end provided with holes 8 for pivotably mounting a trailing arm and, and at their top end with holes 9 for pivotably mounting a shock absorber.

A top plate 4 is welded with a weld 15 to the top ends 25 of both sidewall portions 2, 3, and forms a bridge connecting the two side wall portions. The weld 15 has a triangular cross section, shown in the cross sectional view of Fig. 3, which extends between the top surface of the sidewall portions 2, 3 and the side surface of the top plate 4.

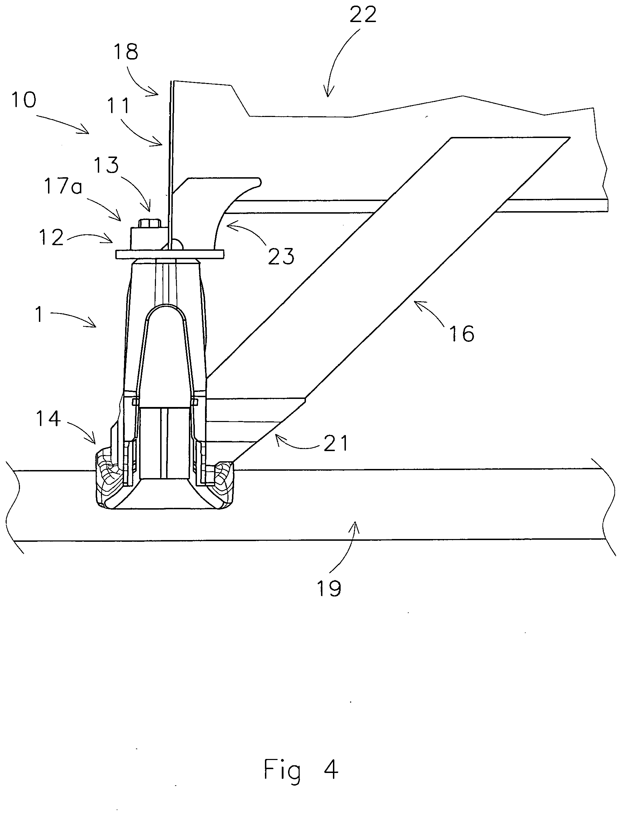

The top plate is provided with holes 5 for in a mounted condition receiving vertically orientated chassis mounting bolts for mounting the bracket to the chassis, shown in Figs. 4-6. The holes 5 are located in the part of the top plate 4 located within the contour of the sidewall portions 2, 3.

In the preferred embodiment shown, bracket is furthermore provided with a front wall portion 6, located at the front of the bracket, and a back wall portion 7, located at the back of the bracket, which both connect the sidewall portions 2, 3 with each other and both are welded to the top plate 4 such that the top plate is welded along its entire contour to the wall portions 2, 3, 6, 7. These additional connections between the side wall portions provide the bracket with extra structural strength.

In an alternative embodiment, the front wall portion of the bracket may extend along the entire height of the bracket instead of bridging only the upper part of the space between the sidewall portions.

Furthermore, in addition to, or instead of, the front wall portion and/or the back wall portion, further connections between the side wall portions may be provided. For example, additional cross beams can be provided inbetween the sidewall portions.

Preferably, the sidewall portions and top plate are shaped out of sheet metal or plate material. Preferably multiple wall portions or sections of wall portions are formed out of one piece of folded sheet material. Thus a limited amount of welds is needed to compose a bracket.

In the preferred embodiment shown the front wall portion and the back wall portion are both composed out of two sections which are part of the same piece sheet material the side wall portions are made of. During construction, a side wall portion 2, 3, a section 6a, 6b of the frontal wall portion 6 and a section of the back wall portion (not shown) are formed out of one piece of sheet material. Once cut in the proper dimensions the sheet is folded such that the front wall portion and the back wall portion are at an angle with the side wall portion. The folded sheets are subsequently welded to the top plate and to each other to form the bracket. Thus, a bracket is formed out of two halves and a top plate. The side wall portions can be connected via the front and back wall portion by applying one weld at the front, and one weld at the back only which reduces production time.

In the preferred embodiment shown, the front wall portion 6 and the back wall portion 7 are welded to the top plate 4 in the same manner as the sidewall portions 2, 3. The connecting front wall portion 6 and the back wall portion 7 are positioned with their top end against a side of the top plate 4, the top plate extending above the wall portions. A weld is located between a topside of the connecting wall portions 6, 7 and the side of the top plate 4 for fixing the sidewall portions against the top plate. Thus the top plate is fixed with a single weld along its contour to all four wall portions.

In an alternative embodiment, the front and/or back wall portion are not fixed to the top plate, or are located at a distance from the top plate, for example halfway the height of the sidewall portions. Also, instead of one continuous weld, the wall portions can also be welded to the top plate with multiple short welds.

The top plate 4 is provided with holes 5 for in a mounted condition, i.e. when the bracket is mounted to the chassis, receiving vertically orientated chassis mounting bolts for mounting the bracket 1 to a chassis.

Preferably, the top plate is one piece of flat sheet material. In an alternative embodiment, the top plate can be composed out of multiple pieces sheet material.

The top plate is provided with a surface which fits against the chassis. In the embodiment shown, the top plate is suited for fixing against a flat section of the chassis, in particular against the surface of a lower web of an I-beam. Alternatively, the top plate can be shaped to fit against a non-flat chassis. For example the top surface of the top plate can mirror the surface of a chassis such as a stepped surface or a surface which in one direction is concave or convex, such as a beam formed out of a U-profile.

The embodiment shown in fig. 1 comprises a top plate 4 which is welded inbetween the top ends 25, 26 of the both side wall portions 2, 3, such that the top plate 4 falls within the contour of the sidewall portions. When seen in top view, the top plate does not extend beyond the contour, or inner surface, of the side wall portions. The sidewall portions 2, 3 are positioned with a side surface of their top ends 25, 26 against a side surface of the top plate 4. The side surface of the top plate extends above the sidewall portions. This allows for a triangular shaped weld 15, fixing the sidewall portions 2, 3 against the top plate 4, to be located between a topside surface of the connecting sidewall portion and the side surface of the top plate.

The top surface of the top plate is positioned at a distance from the top surface of the top end of the side wall portions. Preferably the distance between the top surface of the sidewall portion and the top surface of the top plate is larger than the thickness of the weld fixing the two parts together. Thus, after welding the pieces together it is not necessary to remove any welding material to obtain a bracket with a flat top surface for positioning against the chassis.

Furthermore, since the sidewall portions are positioned with their upper end against a side of the top plate, the top plate is in direct contact with the sidewall portions. When the bracket is loaded, forces acting in a lateral direction can thus be transferred directly from the lateral located sidewall portions to the top plate and do not, or only in a limited amount, load the welds fixing the sidewall portions to the top plate.

In an alternative embodiment, the top plate located on top of the sidewall portions and extends beyond the contour or inner surface of the side wall portions. In this embodiment, the top end of the sidewall portion preferably is bevelled for receiving a weld for fixing the sidewall portion to the top plate. In a further embodiment, the top plate extends beyond the side wall portion to allow for a weld to be located between the outer surface of the sidewall portion and the lower surface of the top plate.

In the preferred embodiment shown, the top plate 4 has an essentially rectangular shape, having a length which is larger than the width of the plate, such that when the bracket is mounted to the vehicle the longitudinal direction of the plate extends in the longitudinal direction of the vehicle. Due to the rectangular shape of the top plate the bracket is fit for transferring torque forces acting about an axis perpendicular to the longitudinal direction of the vehicle, to the chassis.

This is especially beneficial when, as in the embodiment shown, the mounting bracket is not only used for mounting the trailing arm to the chassis but is also used for mounting a shock absorber to the chassis. The combination of the forces exerted by the trailing arm and shock absorber upon the bracket exert a torque about an axis perpendicular to the longitudinal axis of the top plate.

In an alternative embodiment, the length and width of the top plate are equal.

The mounting bracket is mounted with only one row of bolts, the row of bolts extending in the longitudinal direction of the vehicle, to the chassis. In this embodiment the mounting bracket is further fixed to the chassis by way of a cross strut to counteract a torque acting about an axis extending in the longitudinal direction of the vehicle.

By using one row of bolts instead of two or more parallel rows of bolts, fewer bolts have to be tightened to fix the bracket to the chassis. Furthermore, the top end of the bracket can be designed relatively narrow.

In the preferred embodiment shown, the row of holes for receiving the chassis connecting bolts is provided off centre with respect to the middle of the top plate such that when the mounting bracket is mounted against an I-beam, the centre of the bracket is positioned in line with, or close to, the middle body of the I-beam, even when mounting the bracket with one row of bolts only. This is the optimal position for transferring vertical forces from the suspension bracket to the chassis, more in particular to the middle body of the I-beam.

In the preferred embodiment shown, the top plate is further provided with two rows, each of two or more holes, for receiving chassis connecting bolts, one of which is used when the mounting bracket is fixed to the left side of the chassis, and the other is used when the mounting bracket is fixed to the right side of the chassis. Preferably the rows of holes are positioned such that when the mounting bracket is mounted against an I-beam, the centre of the bracket is positioned in line with, or close to, the middle body of the I-beam.

By providing two lines of holes, it is possible to use the same mounting bracket for mounting to the left or right side of the chassis. Thus, only one type of bracket has to be produced and maintained on storage, which reduces costs compared to producing a left and a right type mounting bracket. Furthermore, by using only one line of holes for fixing the mounting bracket to the chassis, it is possible to provide the row of holes at a close distance and therefore to design a relatively narrow top plate, and thus a narrow mounting bracket.

Fig. 3 shows a cross sectional view of a mounting bracket according to the invention with two lines of holes, of each of which one hole is shown. Fig. 4 shows such a mounting bracket in mounted condition. In the embodiment shown only the outside row of holes is used for receiving bolts for fixing the mounting bracket to the chassis. To allow for enough space to handle the bolts, the mounting bracket is positioned a little off centre with respect to the middle body of the I-beam. The other row of holes is located to close to the middle body of the I-beam to use it for mounting the bracket to the I-beam also. When the bracket had been mounted on the opposite side of the chassis, the now redundant row of holes would be used for receiving the bolts.

In an alternative embodiment, the flange of the chassis beam is provided on the inside side of its middle body with a row of holes for receiving the bolts. In a further alternative embodiment, the flange is provided with a row of holes on both sides of the flange, and the bracket is mounted with two rows of bolts to the chassis beam.

The preferred mounting bracket shown is essentially symmetrical with respect to a plane of symmetry positioned inbetween the two side wall portions. Thus, the mounting bracket can be mounted to a left side of the vehicle and a right side of the vehicle.

Thus only one type of mounting brackets has to be produced and kept in stock, which type can be fitted to the left side as well as to the right side of the vehicle.

In an alternative embodiment according to the invention, the holes in the top plate for receiving the bolts are provided with internal screw thread. Thus there is no need for using nuts. This is particularly beneficial since it is not necessary to position the nuts in the limited space inbetween the side wall portions.

The invention furthermore provides a wheel axle suspension, preferably a pneumatically spring wheel axle suspension, for mounting an axle body to the chassis of a vehicle, comprising a mounting bracket according to one or more of the previous claims and a trailing arm received in the mounting bracket. Such a suspension is shown in Figs. 4-6.

Figs. 4-6 show a bracket 1 mounted to the chassis 10 of a vehicle according to the invention, for example a lorry or a lorry trailer. A vehicle chassis is typically provided with a left and a right chassis beam 11 which both extend in essentially a longitudinal direction of the vehicle, each chassis beam comprising at least a lower flange 12 and a middle body 18 which extends perpendicular to the lower flange towards an upper flange (not shown). Fig. 4 furthermore shows a cross beam 22, extending in a direction perpendicular to the longitudinal axis of the vehicle, connecting the left and right chassis beams 11. The cross beam 22 is welded to the middle body 18 of the chassis beams 11. The lower flange 12 is connected to the cross beam 22 via reinforcement plate 23, which is welded to the cross beam 22, the middle body 18 and the lower flange 12 of the chassis beam 11 to provide a stiff chassis.

Typically, a wheel axle suspension is mounted to the lower flange 12 of chassis beams 11 to support a wheel axle 19 which extends in a direction essentially perpendicular to the longitudinal direction of the vehicle. The wheel axle 19 is at a first end mounted via a left wheel axle suspension to the left chassis beam and at an opposite end is mounted via a right wheel axle suspension to the right chassis beam, for example as shown in Fig. 4.

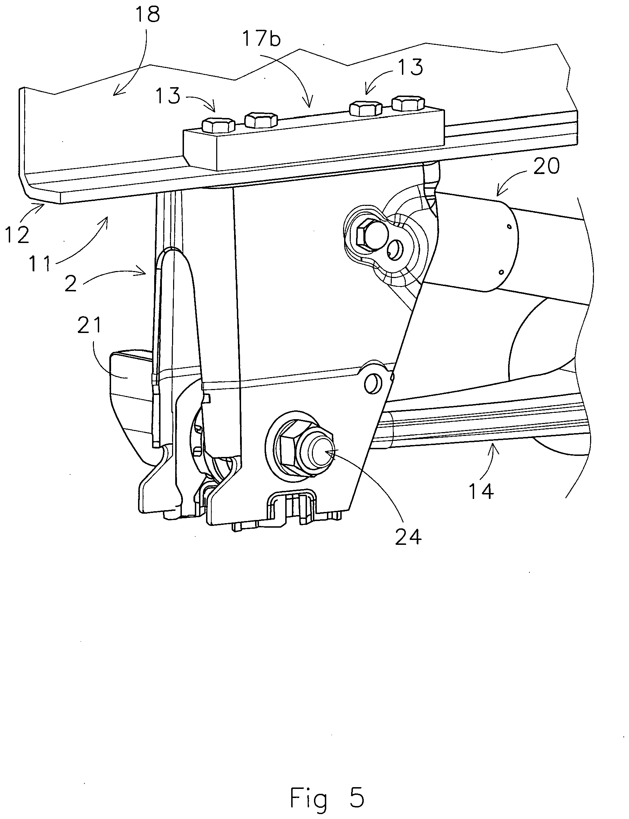

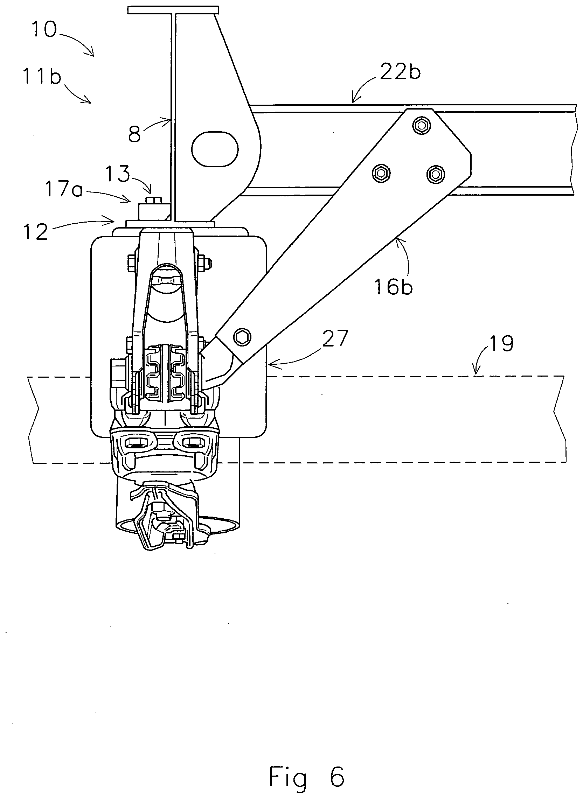

Fig. 4 shows a frontal view of a bracket 1 mounted to an I-beam 11 located at the right side of the vehicle chassis 10. Fig. 5 shows a perspective view of a bracket 1 mounted to an I-beam 11 located at the left side of a vehicle chassis (the wheel axle 19 is not shown in Fig. 5). Fig. 6 shows a frontal view of a suspension similar to the one shown in Fig. 4, furthermore showing an alternatively shaped I beam 11b, cross beam 22b and cross strut 16b. The wheel axle 19 is shown in see through (dotted lines) allowing full view of the pneumatically spring 27, which is positioned beyond the wheel axle.

In Figs. 4-6 the lower flange 12 of the chassis beam is provided with a row of holes for receiving chassis mounting bolts 13 for mounting the mounting bracket 1 to the lower flange. The mounting bracket 1 is mounted to the lower flange 13 of the chassis such that the trailing arm 14 extends in the longitudinal direction of the vehicle.

The left and right chassis beam are provided with holes for receiving the chassis mounting bolts in the lower flange. In the preferred embodiments shown the holes are provided in a part of the lower flange situated at the outside of the middle body, which is the side of the middle body that faces away from the chassis. Thus the bolts are relatively easy to reach which facilitates mounting (and demounting) the brackets.

The brackets 1 are mounted with one row of bolts 13, which allows for easy installing, and for a mounting bracket with a narrow head which can thus be mounted to a chassis beam with a narrow flange.

The mounting brackets 1 shown in Fig. 4 is furthermore mounted to the chassis via a cross connection 16, which extends in a direction essentially perpendicular to the longitudinal direction of the vehicle, in particular a cross strut. Thus, it is possible to use only one row of bolts while securely fixing the mounting bracket against forces acting perpendicular to the longitudinal direction of the vehicle.

The mounting brackets shown in Fig. 4 and Fig.5 are both provided with a couple piece 21 for connecting the strut to the mounting bracket. The connecting piece 21 is mounted to the brackets 1 using the bolt 24 for pivotably connecting the trailing arm 14 to the bracket. Thus the connecting piece can be mounted to each side of the mounting bracket and thus the bracket can be connected to a strut 16 when mounted on the left side as well as when the mounting bracket is mounted on the right side of the chassis, as shown in Fig. 4 (the strut 16 is not shown in Fig. 5).

By fixing the cross strut to the brackets via connecting piece 21 the mounting brackets can be symmetrical with respect to a plane of symmetry positioned inbetween the two side wall portions. Thus only one type of mounting brackets has to be produced and kept in stock, which type can be fitted to the left side as well as to the right side of the vehicle.

In a further preferred embodiment the left and right mounting brackets are also connected to each other via a horizontal axle extending between the brackets.

In the preferred embodiment shown in Figs. 4-6 a first and a second contra profile 17b, 17a are provided. The contra profile shown is a bar shaped body provided with through holes for receiving the bolts 13 mounting respectively the left and the right mounting bracket to the left and right chassis beam. However, the contra profile can for example also be a moulded piece, for example an essentially L-shape profile provided with busses for receiving the bolts

Each contra profile 17b, 17a is provided with a first and second contact surface which in mounted condition lie against the lower flange 12 and the middle body 18 of a chassis beam 11a, 11b respectively.

The contra profile 17b, 17a is provided with a recess between the two contact surfaces for, when mounted to the chassis beam, receiving a longitudinal weld which fixes the middle body and the lower flange together. This longitudinal weld is typically located on the outside of the chassis.

The contra profile provides the connection of the mounting bracket to the chassis beam with extra structural strength. Thus, a mounted vehicle suspension is, while the bracket is mounted with one row of bolts to the chassis only, capable of transferring torques, exerted on the mounting bracket in a direction perpendicular to the longitudinal axis of the vehicle, to the chassis.

Preferably, the contra profile is used in combination with fixing the mounting bracket to the chassis via a cross connection, preferably a strut, as shown in Figs. 4 and 6. The contra profile 17a is mounted to the outside surface of the middle body 18 of the chassis beam 11a, and onto the top surface of the lower flange 12. The cross strut 16 connects the lower inside of the mounting bracket to the chassis. By providing the contra profile, no further reinforcements need to be mounted to the outside of the chassis to enable the mounting bracket to be fixed with one row of bolts only and to transfer torques from the trailing arm to the chassis.

Furthermore, the application of a contra profile allows for using the longer bolts to fix the bracket to the chassis compared to fixing the bracket directly to the flange. This is beneficial since longer bolts allow for better prestressing of the bolts to obtain a prestressed bolt connection.

The contra profile is preferably made out of steel or aluminium. It is observed that it is also possible to weld the contra profile to the chassis prior to mounting the bracket to the chassis.

In an alternative embodiment according to the invention instead of, or in addition to, a cross section or strut, other reinforcements may be provided for securing the mounting bracket to the chassis and/or to the bracket on the opposite side of the chassis.

It is observed that a bracket according to the invention can also be provided as a set comprising a bracket and a contra profile for mounting the bracket to a chassis, in particular to an I-beam of a chassis.

It is observed that trailing arms for wheel axle suspensions of this kind can essentially be divided into two types: spring trailing arms (also referred to as flexible trailing arms) and rigid trailing arms. In practice, a resilient bush is used for connecting rigid trailing arms to a bearing bracket which is mounted on the vehicle chassis, in which case the resilient bush absorbs relative movements of the wheel axle suspension. In the case of wheel axle suspensions which use spring trailing arms, the majority of the relative movements are absorbed by the deformation of a spring portion of the trailing arm itself. In this case, the spring trailing arm is often produced in the form of a monolithic and solid part from a suitable steel grade, in particular spring steel. The spring portion is situated between the area where the wheel axle is connected to the trailing arm and the front end of the trailing arm, where the arm is hingeably attached to a bearing bracket.

Mounting brackets according to the invention can be designed for receiving spring trailing arms as well as rigid trailing arms.

It is observed that trailing arm mounting brackets and/or the contra profile can be made out of steel or aluminium, and are bolted to the chassis of a vehicle, in particular when the vehicle chassis is made of aluminium.

It should be noted that the invention is not limited to the specific examples illustrated in the drawing. The person skilled in the art will easily be able to think of variations and combinations of elements form different exemplary embodiments disclosed and these are deemed to fall within the scope of the invention.

## Claims

1. Vehicle, for example a lorry or a lorry trailer, comprising:
a chassis (10) provided with a left chassis beam and a right chassis beam (11) which both extend in essentially a longitudinal direction of the vehicle, and wherein each chassis beam comprises an upper flange, a lower flange (12) and a middle body (18) which extends between the lower and the upper flange,
a wheel axle body (19) which extends in a direction essentially perpendicular to the longitudinal direction of the vehicle, wherein the wheel axle body (19) is at a first end mounted to the left chassis beam via a left wheel axle suspension which comprises a mounting bracket (1) and a trailing arm (14) received in the mounting bracket, and which wheel axle body (19) is at an opposite end mounted to the right chassis beam via a right wheel axle suspension, which comprises a mounting bracket (1) and a trailing arm (14) received in the mounting bracket,
wherein the left and right mounting bracket (1) each comprise two sidewall portions (2, 3) each having a top end and a bottom end, which sidewall portions are positioned opposite each other at a mutual distance for receiving an end of the trailing arm inbetween their respective bottom ends, and wherein each mounting bracket (1) comprises a top plate (4) which is welded to the top ends of both sidewall portions (2,3),
wherein the lower flange (12) of the left and right chassis beam (11) are each provided with a row of holes receiving chassis mounting bolts (13) respectively mounting the left and right mounting bracket to the left lower flange and right lower flange of the chassis such that each trailing arm extends in the longitudinal direction of the vehicle, and
wherein the top plate (4) of each mounting bracket (1) is provided with at least one row of two or more holes (5) for receiving vertically orientated chassis mounting bolts (13), which holes (5) are located in the part of the top plate (4) located within a contour of the sidewall portions (2, 3) and which at least one row of holes (5) extends in a direction parallel to the longitudinal direction of the vehicle, and wherein the bracket (1) is mounted to the chassis (10) with only one row of bolts (13), using only one row of holes (5) in the top plate (4),
a first and a second contra profile (17a, 17b) provided with through holes receiving the only one row of bolts (13) mounting respectively the left and the right mounting bracket (1) to the left and right chassis beam (11), and
wherein each contra profile (17a, 17b) is provided with a first and second contact surface which in mounted condition respectively lie against the lower flange (12) and the middle body (18) of a chassis beam (11).

2. Vehicle according to claim 1 , wherein the left and right chassis beam (11) are provided with the holes for receiving the chassis mounting bolts (13) in the lower flange (12), preferably in a part of the lower flange situated at the outside of the middle body (18), and wherein the mounting bracket (1) is furthermore mounted to the chassis via a cross connection (16), which extends in a direction essentially perpendicular to the longitudinal direction of the vehicle, in particular a cross strut (16b).

3. Vehicle according to one or more of the previous claims, wherein the top plate (4) of each bracket (1) is provided with two rows of holes (5), one for mounting the bracket at the left side of the chassis, and one for mounting the bracket at the right side of the chassis.

4. Vehicle according to one or more of the previous claims, wherein the top plate (4) of each mounting brackets (1) falls within the contour of the sidewall portions (2, 3) of the mounting bracket.

5. Vehicle according to one or more of the previous claims, wherein the mutual distance between top ends (25) of the sidewall portions (2, 3) of each mounting bracket (1) is smaller than the mutual distance between the bottom ends (26) of the sidewall portions, such that each mounting bracket (1) is wide at its bottom end and narrower at its top end.

6. Vehicle according to one or more of the previous claims, wherein each sidewall portion (2, 3) of each mounting bracket (1) is positioned with a side surface of its upper end against a side surface of the top plate (4) of the mounting bracket (1), the side surface of the top plate extending above the top end of the sidewall portions, and wherein a weld (15) is located between a top surface of each sidewall portion and the side surface of the top plate for fixing the sidewall portions against the top plate.

7. Vehicle according to one or more of the previous claims, wherein the each mounting bracket (1) is furthermore provided with a front wall portion (6) and a back wall portion (7), which both connect the sidewall portions (2, 3) of the mounting bracket with each other and both are welded to the top plate (4) such that the top plate is welded along its entire contour to the wall portions.

8. Vehicle according to one or more of the previous claims, wherein the at least one row of holes (5) of each mounting bracket (1) is provided off centre with respect to the middle of the top plate (4).

9. Vehicle according to one or more of the previous claims, wherein each mounting bracket (1) is essentially symmetrical with respect to a plane of symmetry located inbetween the two side wall portions of the bracket, such that the mounting bracket can be mounted to a left side of the vehicle and a right side of the vehicle.

10. Vehicle according to one or more of the previous claims, wherein the holes (5) for receiving the bolts, of each mounting bracket, are provided with internal screw thread.

11. Vehicle according to one or more of the previous claims, wherein the thickness of the top plate (4) of each mounting bracket (1) is at least one and a half times the thickness of the sidewall portions (2, 3).

12. Set of a mounting bracket and a contra profile for mounting the bracket to a chassis, for use in the axle suspension of a vehicle according to one or more of the previous claims.

13. Wheel axle suspension for use in a vehicle according to one or more of the claims 1-11 and comprising a set according to claim 12.

## Patentansprüche

1. Fahrzeug, beispielsweise ein Lastkraftwagen oder ein LKW-Anhänger, umfassend:
ein Chassis (10), das einen linken Chassisträger und einen rechten Chassisträger (11) aufweist, die sich beide in im Wesentlichen in einer Fahrzeuglängsrichtung erstrecken, und wobei jeder Chassisträger einen oberen Flansch, einen unteren Flansch (12) und einen mittleren Körper (18), der sich zwischen dem unteren und dem oberen Flansch erstreckt, aufweist,
einen Radachsenkörper (19), der sich in einer Richtung im Wesentlichen rechtwinklig zur Fahrzeuglängsrichtung erstreckt, wobei der Radachsenkörper (19) an einem ersten Ende an dem linken Chassisträger über eine linke Radachsenaufhängung angebracht ist, die einen Montagehalter (1) und einen Längslenker (14) aufweist, und wobei der Radachsenkörper (19) an einem gegenüberliegenden Ende über eine rechte Radachsenaufhängung an dem rechten Chassisträger befestigt ist, der einen Montagehalter (1) und einen Längslenker (14), der in dem Montagehalter aufgenommen ist, umfasst,
wobei der linke und rechte Montagehalter (1) jeweils zwei Seitenwandabschnitte (2, 3) aufweisen, die jeweils ein oberes Ende und ein unteres Ende umfassen, wobei die Seitenwandabschnitte einander gegenüberliegend und in einem gegenseitigen Abstand zur Aufnahme eines Endes des Längslenkers zwischen deren jeweiligen unteren Enden angeordnet sind, und wobei jeder Montagehalter (1) eine Deckplatte (4) aufweist, die mit den oberen Enden beider Seitenwandabschnitte (2, 3) verschweißt ist,
wobei jeder untere Flansch (12) des linken und rechten Chassisträgers (11) jeweils mit einer Reihe von Löchern versehen ist, die Bolzen (13) für die Chassisbefestigung aufnimmt, welche jeweils den linken und rechten Montagehalter an dem linken unteren Flansch und dem rechten unteren Flansch des Chassis befestigen, so dass sich jeder Längslenker in Fahrzeuglängsrichtung erstreckt, und
wobei die Deckplatte (4) jedes Montagehalters (1) mit mindestens einer Reihe von zwei oder mehr Löchern (5) zur Aufnahme von vertikal ausgerichteten Bolzen (13) für die Chassisbefestigung versehen ist, welche Löcher (5) sich in dem Teil der Deckplatte (4) befinden, der sich innerhalb einer Kontur der Seitenwandabschnitte (2, 3) befindet, wobei die mindestens eine Reihe der Löcher (5) sich in einer Richtung parallel zur Fahrzeuglängsrichtung erstreckt, und wobei der Montagehalter (1) mit nur einer Reihe von Bolzen (13) an dem Chassis (10) unter Verwendung nur einer Reihe von Löchern (5) in der Deckplatte (4) befestigt ist,
ein erstes und ein zweites Gegenprofil (17a, 17b), die mit Durchgangslöchern versehen sind, welche nur die eine Reihe von Bolzen (13) aufnimmt, die jeweils den linken und den rechten Montagehalter (1) an dem linken und rechten Chassisträger (11) befestigt, und
wobei jedes Gegenprofil (17a, 17b) mit einer ersten und zweiten Anlagefläche versehen ist, die im montierten Zustand jeweils am unteren Flansch (12) und dem mittleren Körper (18) eines Chassisträgers (11) anliegen.

2. Fahrzeug nach Anspruch 1, wobei der linke und rechte Chassisträger (11) mit den Löchern zur Aufnahme der Bolzen (13) für die Chassisbefestigung in dem unteren Flansch (12) versehen sind, vorzugsweise in einem Teil des unteren Flansches, der an der Außenseite des mittleren Körpers (18) gelegen ist, und wobei ferner der Montagehalter (1) über eine Querverbindung (16) an dem Chassis befestigt ist, die sich in einer Richtung im Wesentlichen senkrecht zur Fahrzeuglängsrichtung erstreckt, insbesondere eine Querstrebe (16b).

3. Fahrzeug nach einem oder mehreren der vorhergehenden Ansprüche, wobei die Deckplatte (4) jedes Montagehalters (1) mit zwei Reihen von Löchern (5) versehen ist, eine zur Befestigung der Konsole an der linken Seite des Chassis, und eine zur Befestigung der Konsole an der rechten Seite des Fahrgestells.

4. Fahrzeug nach einem oder mehreren der vorhergehenden Ansprüche, wobei die Deckplatte (4) jedes Montagehalters (1) innerhalb der Kontur der Seitenwandabschnitte (2, 3) des Montagehalters fällt.

5. Fahrzeug nach einem oder mehreren der vorhergehenden Ansprüche, wobei der gegenseitige Abstand zwischen oberen Enden (25) der Seitenwandabschnitte (2, 3) jedes Montagehalters (1) kleiner ist als der gegenseitige Abstand zwischen den unteren Enden (26) der Seitenwandabschnitte, so dass jeder Montagehalter (1) an seinem unteren Ende breit und an seinem oberen Ende schmaler ausgebildet ist.

6. Fahrzeug nach einem oder mehreren der vorhergehenden Ansprüche, wobei jeder Seitenwandabschnitt (2, 3) jedes Montagehalters (1) mit einer Seitenfläche seines oberen Endes gegen eine Seitenfläche der Deckplatte (4) des Montagehalters (1) positioniert ist, wobei sich die Seitenfläche der Deckplatte über das obere Ende der Seitenwandabschnitte erstreckt, und wobei eine Schweißnaht (15) zwischen einer oberen Fläche jedes Seitenwandabschnitts und der Seitenfläche der Deckplatte angeordnet ist, um die Seitenwandabschnitte gegen die Deckplatte zu halten.

7. Fahrzeug nach einem oder mehreren der vorhergehenden Ansprüche, wobei jeder Montagehalter (1) ferner mit einem Vorderwandabschnitt (6) und einem Rückwandabschnitt (7) versehen ist, die beide die Seitenwandabschnitte (2, 3) des Montageträgers miteinander verbinden und beide mit der Deckplatte (4) verschweißt sind, so dass die Deckplatte entlang ihrer gesamten Kontur mit den Wandabschnitten verschweißt ist.

8. Fahrzeug nach einem oder mehreren der vorhergehenden Ansprüche, wobei die mindestens eine Reihe von Löchern (5) jedes Montagehalters (1) außermittig zur Mitte der Deckplatte (4) vorgesehen ist.

9. Fahrzeug nach einem oder mehreren der vorhergehenden Ansprüche, wobei jeder Montagehalter (1) im Wesentlichen symmetrisch zu einer zwischen den beiden Seitenwandabschnitten des Montagehalters liegenden Symmetrieebene ist, so dass der Montagehalter an einer linken Fahrzeugseite und an einer rechten Fahrzeugseite montierbar ist.

10. Fahrzeug nach einem oder mehreren der vorhergehenden Ansprüche, wobei die Löcher (5) zur Aufnahme der Bolzen, jeweils für jeden Montagehalter, mit einem Innengewinde versehen sind.

11. Fahrzeug nach einem oder mehreren der vorhergehenden Ansprüche, wobei die Dicke von der Deckplatte (4) jedes Montagehalters (1) mindestens das Eineinhalbfache der Dicke der Seitenwandabschnitte (2, 3) ist.

12. Satz eines Montagehalters und eines Gegenprofils zur Montage des Montagehalters an einem Chassis, zur Verwendung in der Achsaufhängung eines Fahrzeugs nach einem oder mehreren der vorhergehenden Ansprüche.

13. Radachsenaufhängung zur Verwendung in einem Fahrzeug nach einem oder mehreren der Ansprüche 1 - 11 und umfassend einen Satz nach Anspruch 12.

## Revendications

1. Véhicule, par exemple un camion ou une remorque de camion, comprenant:
un châssis (10) pourvu d'une poutre de châssis gauche et d'une poutre de châssis droite (11) qui s'étendent toutes deux sensiblement dans une direction longitudinale du véhicule, et dans lequel chaque poutre de châssis comprend une bride supérieure, une bride inférieure (12) et un corps intermédiaire (18) qui s'étend entre la bride inférieure et la bride supérieure,
un corps d'essieu de roue (19) qui s'étend dans une direction sensiblement perpendiculaire à la direction longitudinale du véhicule, dans lequel le corps d'essieu de roue (19) est fixé, à une première extrémité, à la poutre de châssis gauche par l'intermédiaire d'une suspension d'essieu de roue gauche qui comprend un support (1) de montage et un bras de suspension (14) reçu dans le support de montage, et lequel corps d'essieu de roue (19) est fixé, à une extrémité opposée, à la poutre de châssis droite par l'intermédiaire une suspension d'essieu de roue droite, qui comprend un support (1) de montage et un bras de suspension (14) reçu dans le support de montage,
dans lequel les supports de montage (1) gauche et droit comprennent chacun deux parties (2, 3) de paroi latérale ayant chacune une extrémité supérieure et une extrémité inférieure, lesquelles parties de paroi latérale étant positionnées en regard l'une de l'autre à une distance mutuelle pour recevoir une extrémité du bras de suspension entre leurs extrémités inférieures respectives, et dans lequel chaque support (1) de montage comprend une plaque supérieure (4) qui est soudée aux extrémités supérieures des deux parties (2, 3) de paroi latérale,
dans lequel la bride inférieure (12) des poutres de châssis gauche et droite (11) sont munies chacune d'une rangée de trous recevant des boulons (13) de montage du châssis fixant respectivement les supports de montage gauche et droit sur la bride inférieure gauche et la bride inférieure droite du châssis de sorte que chaque bras de suspension s'étend dans la direction longitudinale du véhicule, et
dans lequel la plaque supérieure (4) de chaque support (1) de montage est munie d'au moins une rangée de deux trous (5) ou plus pour recevoir des boulons (13) de fixation du châssis orientés verticalement, lesquels trous (5) étant situés dans la partie de la plaque supérieure (4) située à l'intérieur d'un contour des parties (2, 3) de paroi latérale et laquelle au moins une rangée de trous (5) s'étend dans une direction parallèle à la direction longitudinale du véhicule, et dans laquelle le support (1) est fixé au châssis (10) avec une seule rangée de boulons (13), en utilisant une seule rangée de trous (5) dans la plaque supérieure (4),
un premier et un second contre-profilés (17a, 17b) munis de trous traversants recevant la seule rangée de boulons (13) fixant respectivement les supports de montage (1) gauche et droit aux poutres de châssis (11) gauche et droite, et
dans lequel chaque contre-profilé (17a, 17b) est pourvu d'une première et d'une seconde surface de contact qui, à l'état de fixation, reposent respectivement contre la bride inférieure (12) et le corps intermédiaire (18) d'une poutre de châssis (11).

2. Le véhicule selon la revendication 1, dans lequel les poutres de châssis (11) gauche et droite sont munies des trous pour recevoir les boulons (13) de fixation du châssis dans la bride inférieure (12), de préférence dans une partie de la bride inférieure située à l'extérieur du corps intermédiaire (18), et dans lequel le support (1) de montage est en outre fixé au châssis par l'intermédiaire d'une liaison transversale (16), qui s'étend dans une direction sensiblement perpendiculaire à la direction longitudinale du véhicule, en particulier une entretoise transversale (16b).

3. Le véhicule selon une ou plusieurs des revendications précédentes, dans lequel la plaque supérieure (4) de chaque support (1) est munie de deux rangées de trous (5), l'une pour fixer le support au côté gauche du châssis et l'une pour fixer le support au côté droit du châssis.

4. Le véhicule selon une ou plusieurs des revendications précédentes, dans lequel la plaque supérieure (4) de chaque support (1) de montage tombe dans le contour des parties (2, 3) de paroi latérale du support de montage.

5. Le véhicule selon une ou plusieurs des revendications précédentes, dans lequel la distance mutuelle entre les extrémités supérieures (25) des parties (2, 3) de paroi latérale de chaque support (1) de montage est inférieure à la distance mutuelle entre les extrémités inférieures (26) des parties de paroi latérale, de telle sorte que chaque support (1) de montage est large à son extrémité inférieure et plus étroite à son extrémité supérieure.

6. Le véhicule selon une ou plusieurs des revendications précédentes, dans lequel chaque partie (2, 3) de paroi latérale de chaque support (1) de montage est positionnée avec une surface latérale de son extrémité supérieure contre une surface latérale de la plaque supérieure (4) du support (1) de montage, la surface latérale de la plaque supérieure s'étendant au-dessus de l'extrémité supérieure des parties de paroi latérale, et dans lequel une soudure (15) est située entre une surface supérieure de chaque partie de paroi latérale et la surface latérale de la plaque supérieure pour immobiliser les parties de paroi latérale contre la plaque supérieure.

7. Le véhicule selon une ou plusieurs des revendications précédentes, dans lequel chaque support (1) de montage est en outre muni d'une partie (6) de paroi avant et d'une partie (7) de paroi arrière qui relient toutes deux les parties (2, 3) de paroi latérale du support de montage l'une à l'autre et sont toutes deux soudées à la plaque supérieure (4) de telle sorte que la plaque supérieure est soudée le long de son contour entier aux parties de paroi.

8. Le véhicule selon une ou plusieurs des revendications précédentes, dans lequel la au moins une rangée de trous (5) de chaque support (1) de montage est décentrée par rapport au milieu de la plaque supérieure (4).

9. Le véhicule selon une ou plusieurs des revendications précédentes, dans lequel chaque support (1) de montage est sensiblement symétrique par rapport à un plan de symétrie situé entre les deux parties de paroi latérale du support, de sorte que le support de montage peut être fixé à un côté gauche du véhicule et à un côté droit du véhicule.

10. Le véhicule selon une ou plusieurs des revendications précédentes, dans lequel les trous (5) destinés à recevoir les boulons de chaque support de montage sont pourvus d'un filet de vis interne.

11. Le véhicule selon une ou plusieurs des revendications précédentes, dans lequel l'épaisseur de la plaque supérieure (4) de chaque support (1) de montage est d'au moins une fois et demi l'épaisseur des parties (2, 3) de paroi latérale.

12. Ensemble d'un support de montage et d'un contre-profilé pour fixer un support à un châssis, destiné à être utilisé dans la suspension d'essieu d'un véhicule selon une ou plusieurs des revendications précédentes.

13. Suspension d'essieu de roue destinée à être utilisée dans un véhicule selon une ou plusieurs des revendications 1 à 11 et comprenant un ensemble d'un selon la revendication 12.
